# EUROPEAN PATENT SPECIFICATION

(11) **EP 1 158 313 B1**
(45) Date of publication and mention of the grant of the patent: **06.10.2004**
(21) Application number: 01304671.9
(22) Date of filing: 25.05.2001
(51) Int. Cl.: G01V 13/00, G01G 23/00

(54) **Article handling system**
Handhabungssystem für Gegenstände
Système de manipulation d'articles

(30) Priority: 26.05.2000 GB 0012994
(43) Date of publication of application: 28.11.2001
(73) Proprietor: ISHIDA CO., Ltd., Kyoto-shi, Kyoto (JP)
(72) Inventor: Muramiya, Masahiko, c/o Shiga Integrated Facility, Kurita-gun, Shiga (JP); Yonetsu, Michihiko, c/o Shiga Integrated Facility, Kurita-gun, Shiga (JP); Kawamura, Takumi, c/o Shiga Integrated Facility, Kurita-gun, Shiga (JP); Sato, Ryoichi, c/o Shiga Integrated Facility, Kurita-gun, Shiga (JP); Bennett, Robert, c/o ISHIDA EUROPE, Warley, West Midlands, B66 1RJ (GB)
(74) Representative: Skone James, Robert Edmund

(56) References cited:
- EP-A- 0 418 069
- JP-A- 9 072 885
- US-A- 4 726 434
- PATENT ABSTRACTS OF JAPAN vol. 016, no. 155 (P-1338), 16 April 1992 (1992-04-16) & JP 04 006489 A (NISSHIN DENSHI KOGYO KK), 10 January 1992 (1992-01-10)

## Description

The invention relates to an article handling system comprising a flow path along which articles travel in use; and a metal detection system for detecting the passage of metal items along the flow path. The invention also relates to a method of monitoring the performance of a metal detection system.

Metal detection systems are used in a large range of article handling systems, particularly those for handling food stuffs, to monitor for the presence of metal items. If a metal item is detected, the system must be stopped to enable the item to extracted.

It is important in these applications to check the sensitivity and performance of the metal detection system. In conventional weighing systems and the like in which articles such as potato chips are dropped generally vertically from a weighing machine to a packaging machine, the sensitivity of the metal detection system provided around the flow path is checked by dropping a metal test piece along the flow path. Conventionally, this has been done by manually dropping the test piece which may for example be an iron or stainless steel sphere and determining whether or not the metal detection system senses the passage of the item. This is then repeated with spheres of different sizes. In view of the need to introduce the metal item into the flow path, it is conventional to stop the article handling system while the sensitivity check is carried out.

Another example of this approach is described in JP-A-9072885 in which a metal chip is placed on an article conveyor which then carries the chip past a metal detector. The conveyor reverses to allow the chip to be retrieved.

There are a number of problems with the conventional systems. One of the most important is the need to recover the test piece after the test. This is often difficult to achieve and will result in significant waste of bags and the like while the test piece is located. It is therefore important to monitor the output from packaging machine to ensure that the metal piece can be retrieved.

In addition, particularly in the case of combination weighing machines, since the metal test piece is dropped through a relatively narrow opening, there is a risk that the test piece may be caught in a part of the machine and this will take significant time to recover. It is also important that the test piece passes a predetermined position to ensure that the sensitivity of the metal detection system is correctly adjusted. This is difficult to achieve with the conventional systems.

US-A-4726434 describes a method of checking the sensitivity of a metal detection system provided around a discharge chute of a combination weighing machine. In this case, a metal test piece is supplied to one of the weighers of a combination weighing machine and the processor ensures that at the correct time, this particular weigher is involved in the combination which is released. Nevertheless, it is still necessary to recover the test piece and to stop the weighing machine following the test cycle.

GB-A-2235981 (and EP-A-0418069) describes how a metal slug is located within a closed guide tube extending alongside or even through an aperture through which articles are normally conveyed and which is exposed to an electromagnetic field of a metal detector. The slug is moved along the guide tube to test the metal detector. The arrangements disclosed suffer from a number of problems. Thus, in cases where the guide tube does not extend through the aperture, then if there is inadequate exposure of the aperture to the electromagnetic field, this will not be detected while if the guide tube extends through the aperture, this will impede the flow of articles.

In accordance with one aspect of the present invention, an article handling system comprises a flow path along which articles travel in use; a metal detection system having a metal detector for detecting the passage of metal items along the flow path; and a metal detector test system and is characterized in that the metal detector test system includes a guide member to which a metal test piece is fixed, the guide member being located relative to the flow path and operable so as to move the test piece along the flow path past the metal detector in order to detect the sensitivity of the detector.

In accordance with a second aspect of the present invention, a method of monitoring the performance of a metal detection system having a metal detector for detecting the passage of metal items along a flow path of an article handling system according to the first aspect of the invention comprises controllably moving the guide member so as to move the metal test piece along the flow path; and determining whether or not the metal detection system detects the metal test piece.

In contrast to the known arrangements, we have devised a metal detector test system which includes a guide member to which the metal test piece is fixed and which positively moves the test piece along the flow path of the articles. This avoids the problem of recovery since the metal test piece remains supported by the test system, the test piece is moved in a predetermined manner so that accurate knowledge of its location relative to the metal detection system is obtained, and the test piece is exposed to the actual environment of the articles since it is moved along the article flow path.

An important aspect of this invention is that although the method could be implemented while the article handling system is not operational, in the preferred approach, the metal test piece is moved along the flow path during normal operation of the article handling system. The advantage of this is that typically the articles themselves have some metallic qualities and therefore it is important that the metal detection system is insensitive to the normal articles but is still sensitive to the passage of rogue metal items. If the test was carried out in the absence of articles then the metal detection system could be set at too sensitive a level. Of course, where the articles comprise (unwrapped) food stuffs, it may be necessary to dispose of those articles which have passed along the flow path at the same time as the metal test piece but the advantage achieved by on-line monitoring will typically exceed this disadvantage.

The metal detector test system could be implemented in a number of different ways. For example, the test system may comprise a fluid operated cylinder coupled to a probe constituting said guide member to which the test piece is fixed; and a control system for controlling the supply of fluid to the cylinder to force the probe to move the test piece along the flow path. The cylinder could be pneumatically or hydraulically actuated.

In a second example, the system comprises a linkage assembly comprising a number of links, pivoted together in a concertina arrangement, the test piece being fixed on one of the links constituting said guide member; and a control system for extending the linkage assembly so as to move the test piece along the flow path.

In a third example, particularly where the flow path extends in a substantially vertical direction, the test system may comprise an elongate flexible line constituting said guide member to which the test piece is fixed and which can be lowered along the flow path; and a control system for controlling the payout of the line.

In some cases, the metal test piece could remain in the flow path when not in use even though it may contact the articles being handled. However, in many cases this is undesirable and therefore preferably the metal detector test system is operable to move the test piece to a retracted position where it does not interfere with articles flowing along the flow path. In the case of a vertical flow path, this can be achieved by retracting the metal test piece to a position upstream of the point at which articles enter the flow path.

Typically, the parts of the metal detector test system which can be brought into the vicinity of the metal detection system are non-magnetic. This minimises the risk that items other than the metal test piece are used to adjust the sensitivity of the metal detection system.

In general, the article handling system will have a single metal detector test system. However, in some cases, more than one such system of either the same or different construction could be provided. This enables the metal detector to be tested under different conditions without having to replace the test piece. For example test pieces of different materials (iron, stainless steel etc) or different sizes could be provided on the different test systems.

The invention is applicable to a wide variety of article handling systems but is particularly suitable for use with weighing machines and most particularly in combinational weighing apparatus.

The article handling system can be operated in a variety of ways following detection of a metal item. In general, the system will be stopped. In that case, if the system feeds articles to a packaging machine then the packaging machine also could be stopped or alternatively it could be controlled to form a non-standard bag (for example a bag having a non-standard length such as a double length) which is either retained within the packaging machine or allowed to be fed out of the packaging machine and detected subsequently. In other cases, however, the system could be allowed to continue to run with a divider being inserted into the flow path to divert a detected metal item away from the flow path and/or causing a packaging machine to create a non-standard bag which will then be rejected in a conventional manner.

Some examples of combinational weighing apparatus according to the invention will now be described with reference to the accompanying drawings, in which:-
Figure 1 is a schematic side view, partly cut away, of a first example;
Figures 2A and 2B illustrate the metal detector test system of Figure 1 in more detail and in two different positions;
Figure 3 illustrates schematically a second example according to the invention;
Figure 4 is a schematic, block diagram of the control system; and,
Figures 5 to 7 are flow diagrams illustrating different methods of operation of the system shown in Figures 1 to 4.

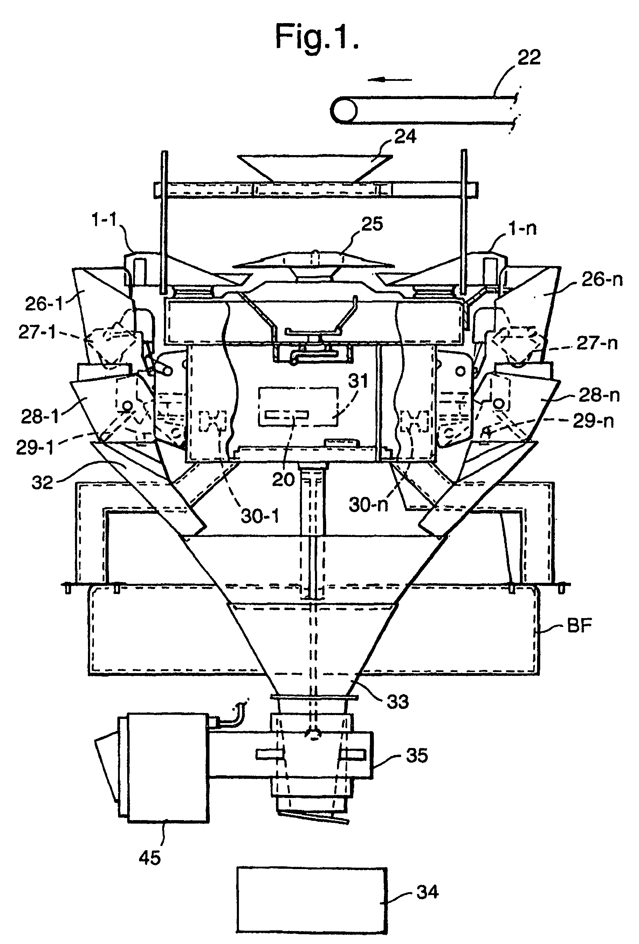

A combination weighing and counting apparatus utilizing vibrating feeders is shown in a schematic side sectional representation in Figure. 1. The illustrated combination weighing and counting apparatus is supported on a machine base frame BF, and articles transported by means of a supply conveyor 22 are supplied onto a center portion of a dispensing feeder 25 of a vibrating type through a supply chute 24. A number N of vibrating feeders 1 (1-1 to 1-n) are radially disposed around and in the vicinity of an outer periphery of the dispensing feeder 25 and are so mounted on a frame F, which is in turn supported by the machine base frame BF, as to receive articles dispensed radially outwardly from the dispensing feeder 25 while the latter is vibrated. The vibrating feeders 1 when vibrated at a predetermined amplitude and a predetermined frequency cause the articles, received thereby, to move radially outwardly and then fall downwardly onto corresponding pool hoppers 26 (26-1 to 26-n) that are arranged in a circular row on the frame F at respective locations immediately below radially outer ends of the vibrating feeders 1.

The articles transported by means of the vibrating feeders 1 are, after having been temporarily pooled in the pool hoppers 26 (26-1 to 26-n) and after discharge gates 27 (27-1 to 27-n) of some of the pool hoppers 26 (26-1 to 26-n) that have been selected according to a weighing operation has been subsequently opened, supplied onto weighing hoppers 28 (28-1 to 28-n) that are also mounted on the frame F at respective locations immediately below and in alignment with the pool hoppers 26 (26-1 to 26-n). The weight of the articles within each of the weighing hoppers 28 is measured by a corresponding weight detecting means 30 (30-1 to 30-n) such as a load cell from which a weight detection signal can be outputted. Based on this weight detection signal, a combination calculation is performed by a combination selecting means 20 built in a control device 31, and some of the weighing hoppers 28 which result in the total weight of the articles in those weighing hoppers 28 that falls within a tolerance range determined based on a target weight are selected, followed by opening of respective discharge gate 29 (29-1 to 29-n) of the selected weighing hoppers 28 with the articles consequently collected onto associated collecting chutes 32. The articles so collected in the collecting chutes 32 are then discharged through a central chute 33 to a bagging or packaging machine 34 where they are packaged in a bag containing the articles of a total weight equal to or substantially equal to the target weight.

The weighing hoppers 28 that have been emptied as a result of the previously described weighing operation perform the subsequent cycle of weighing operation after the articles have been supplied from the pool hoppers 26 during the subsequent weighing, and the vibrating feeders 1 that have supplied the articles onto the emptied pool hoppers 26 are simultaneously driven. After a predetermined quantity of articles have been supplied onto the pool hoppers 26, the associated vibrating feeders 1 terminate their delivery operation and are held at a stand-by state. The foregoing operation of the combination weighing apparatus is executed under the control of the control device 31.

Located about a narrow portion of the chute 33 is a metal detector 35 in the form of a coil coupled with detection electronics 45. The detection electronics 45 are connected to the control device 31.

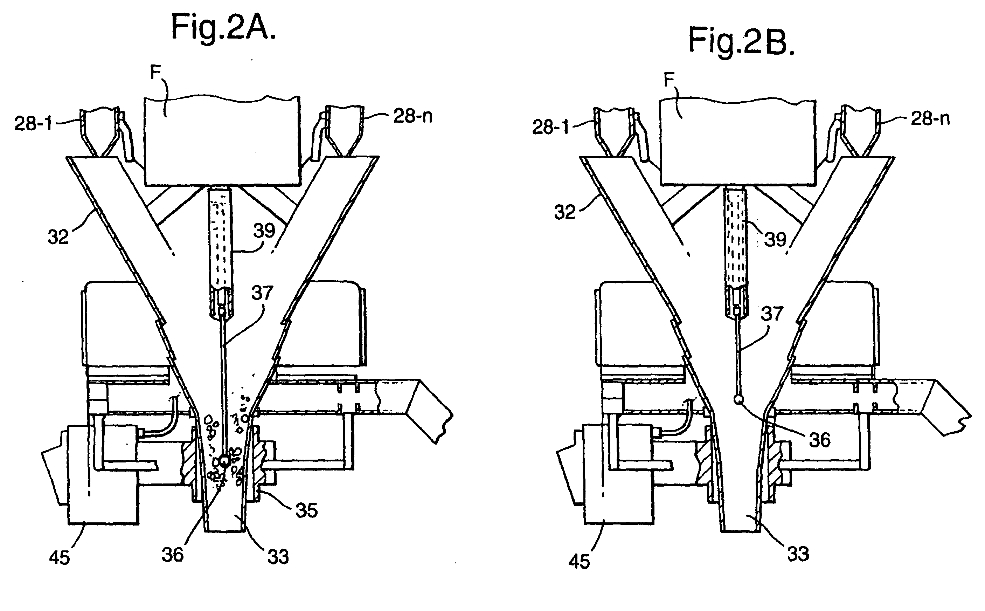

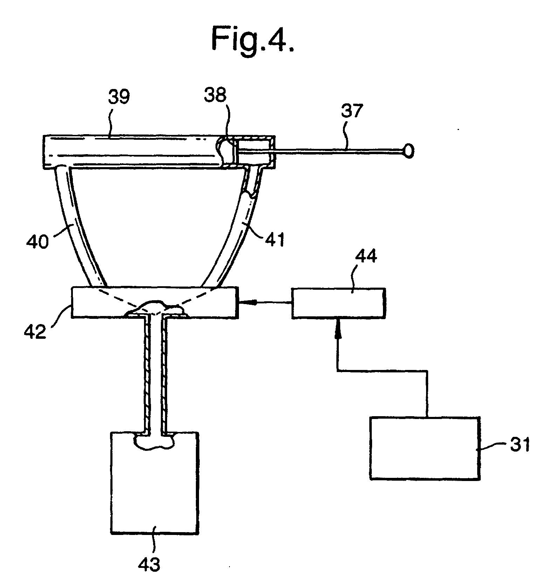

In order to test the sensitivity of the metal detector 35 a small metal sphere 36 is controllably moved into the chute 33 in the vicinity of the metal detector as can be seen in Figure 2A from a retracted position shown in Figure 2B. This is achieved by connecting the metal sphere to a non-magnetic (typically acetal) probe 37 connected to a piston 38 (Figure 4) of a double acting piston/cylinder arrangement 39. As can be seen in Figure 4, the cylinder of the arrangement 39 is connected via tubes 40,41 at respective ends to a valve 42 which in turn is connected to a compressed air source 43. By suitably controlling the valve 42, compressed air can be supplied either through the tube 40 (to extend the probe 37) or through the tube 41 (to retract the probe 37).
The position of the valve 42 is controlled via a solenoid 44 connected to the control device 31. Other arrangements are envisaged, for example the arrangement 39 could have a spring to bias the piston towards one end and a single compressed air supply to act against the bias.

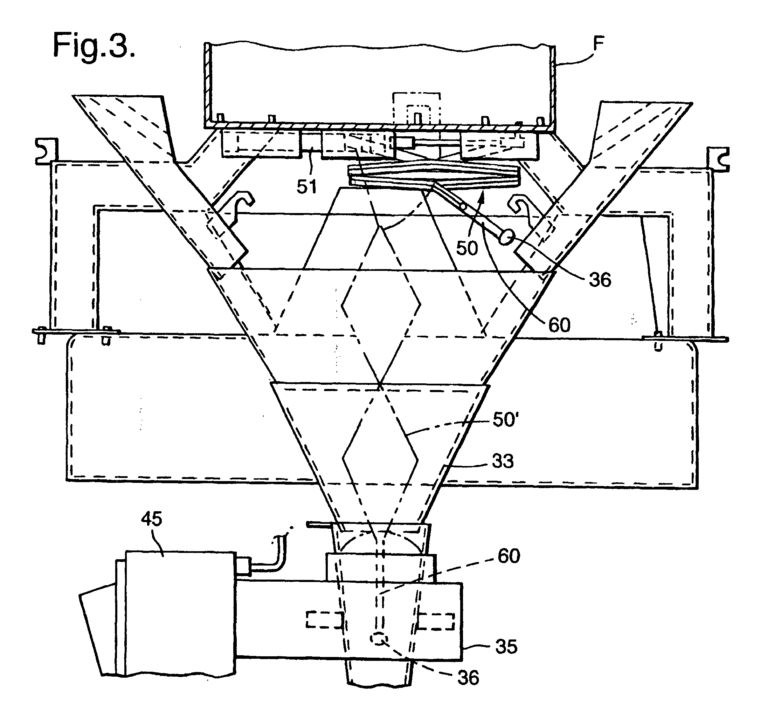

Figure 3 illustrates a modified embodiment in which the probe 37 is replaced by a "magic hand" or concertina arrangement of pivoted links 50 shown in solid lines in Figure 3 in their retracted position and in chain dotted lines 50' in their extended position with the test piece 36 below the detector 35. The position of the magic hand 50 is controlled by a piston cylinder arrangement 51 of an exactly similar form to the arrangement 39 and so this will not be described in more detail. The metal test piece 36 is held on an arm 60 connected to the magic hand.

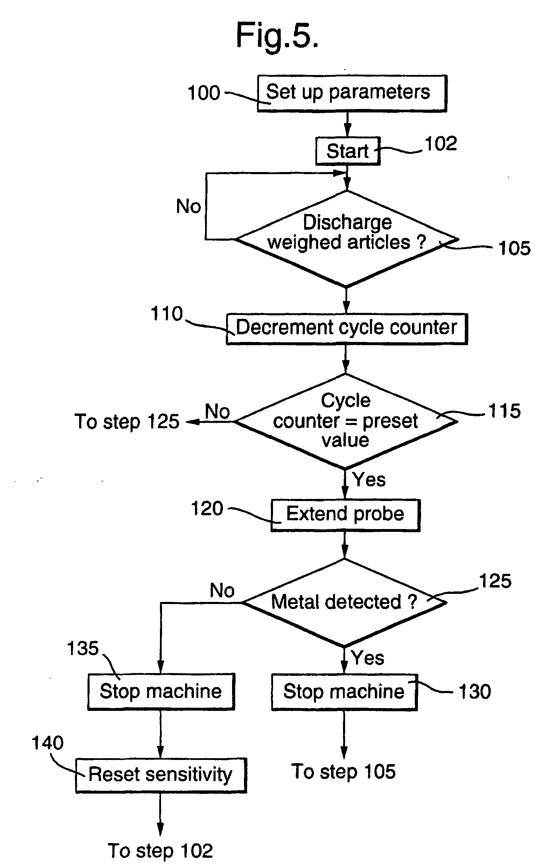

A first example of the operation of the example shown in Figures 1 and 4 will now be described with reference to Figure 5.

Initially various parameters must be set up (step 100, Figure 5). These include the time during which the test piece is to be located in its extended position, the time to bring the test piece to the test position, and the frequency at which the test is to be carried out. Typically, this frequency will be based on either a specified time interval or, in the case of a packaging machine, upon completion of a certain number of bags (or both). For example, the test might be run every 1000 bags in a typical potato chip weighing/packaging system. The system will then start (step 102) and the following steps will be carried out by the control device 31. Initially, the device 31 determines whether or not weighed articles are being discharged (step 105). If they are, a cycle counter is decremented (step 110) and a comparison is made to see whether the number of cycles since the last test is equal to the preset parameter (step 115). If it does, then a control device 31 actuates the solenoid 44 to connect the compressed air source 43 with the tube 40 so as to cause the probe 37 to move to its extended position shown in Figure 2A (step 120). The probe is maintained in this position for the predetermined time and then retracted.

The control device 31 monitors the output from the electronics 45 to determine whether or not the presence of metal is detected (step 125). If it is, the control device 31 stops operation of the article handling system (step 130). The reason for this is that it is possible that at the same time the test piece was brought to the extended position, another, rogue metal item was fed through the chute 33. For safety, therefore, it is important that the machine is stopped in any event. Once the operator has confirmed that the machine is clear, he will restart it and processing returns to step 105. However, in other applications this may not be necessary (see below).

If no metal is detected in step 105, then an error condition has arisen. Again, the machine will be stopped (step 135) allowing any rogue metal items to be removed while at the same time the control device 31 resets the sensitivity of the metal detector electronics 45 to a more sensitive setting (step 140) and processing returns to step 102.

If a test cycle has not been reached in step 115, then the system will operate in a conventional manner to monitor the electronics 45 to sense for the presence of metal items and, if detected, to stop the machine in the same way as steps 125,130.

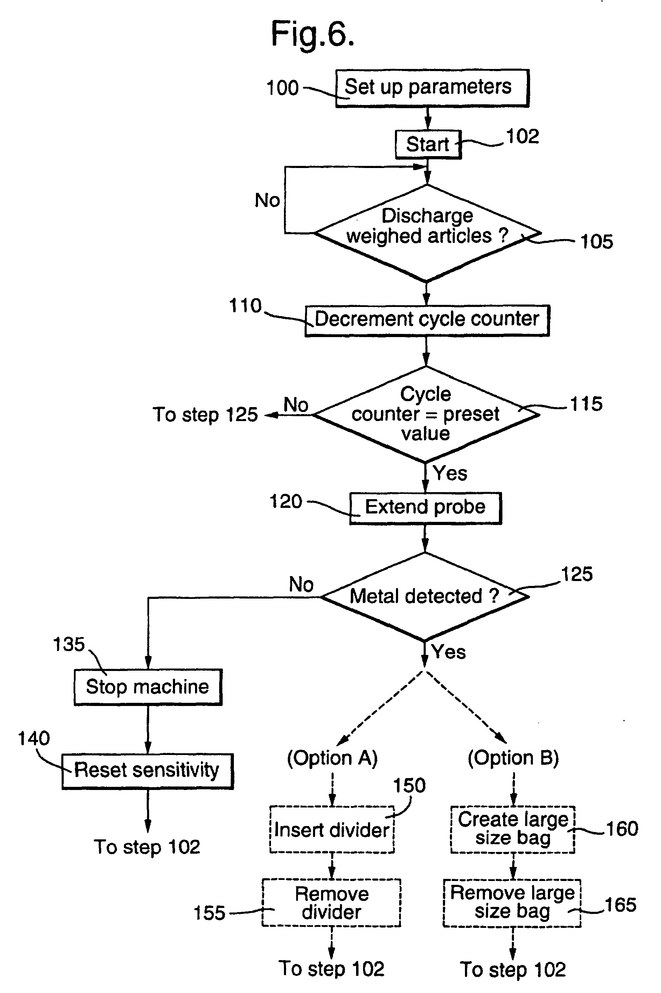

It will be noted that in this case, whenever the metal piece is detected, the machine stops. Some alternative options are illustrated in Figure 6. In Figure 6, those steps with the same references numerals in Figure 5 carry out the same functions.

As can be seen in Figure 6, if metal is detected in step 125 then there are two options A, B which could be followed depending upon how the control device 31 is set up.

In option A, a divider (not shown) is inserted into the chute 33 to prevent articles and any metal objects from passing into the currently formed package (step 150). The divider is then removed (step 155) and processing returns to step 102.

In a more preferred option, option B, the control device 31 prevents a cutter within the packaging machine from operating on the current bag so that a double length bag is created (step 160). The next cut is made so that the double size bag is removed form the packaging machine and fed in a conventional manner to a check weigher (not shown) which not only monitors the weight of the bag but also checks its length. On sensing a double length bag, this will then be removed by blowing or pushing the bag off the feed line (step 165).

In a further option, the packaging machine could be stopped with the double length bag retained in its jaws. An operator can then remove the double length bag and then restart the packaging machine.

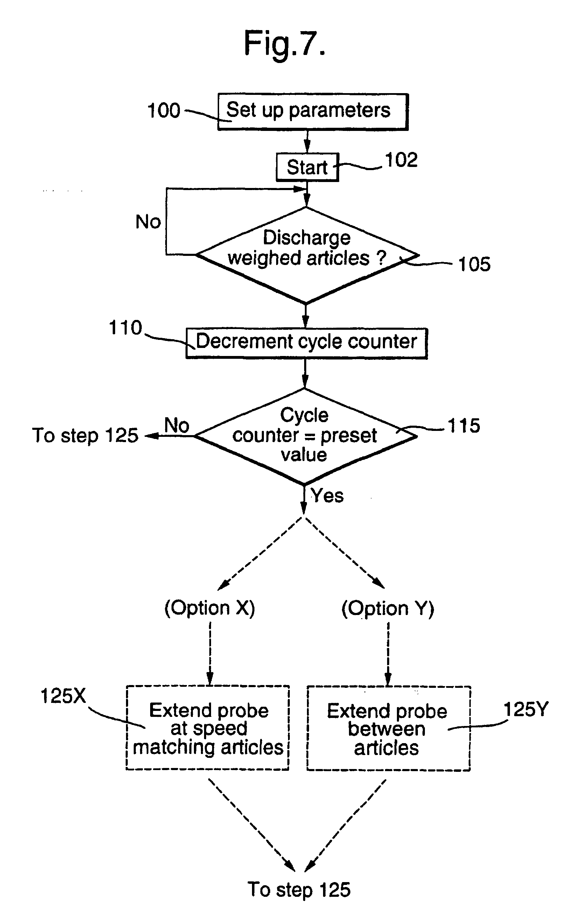

In some cases, the manner in which the probe is extended in step 120 needs to be considered. Two options X, Y are illustrated in Figure 7.

In option X, the probe is extended (step 125x) at a speed which matches the timing of the falling articles and the speed of those articles. Alternatively, in option Y, the probe is extended at a predetermined time after a discharge signal so that the probe is extended between the passage of successive articles (step 125y), thus reducing the risk of any damage to those articles.

Following option X, or option Y, processing returns to step 125 and follows the process of either Figure 5 or Figure 6.

## Claims

1. An article handling system comprising a flow path along which articles travel in use; a metal detection system having a metal detector for detecting the passage of metal items along the flow path; and a metal detector test system, **characterized in that** metal detector test system includes a guide member to which a metal test piece is fixed, the guide member being located relative to the flow path and operable so as to move the test piece along the flow path past the metal detector in order to detect the sensitivity of the detector.

2. A system according to claim 1, wherein the metal detector test system comprises a fluid operated cylinder coupled to a probe constituting said guide member to which the test piece is fixed; and a control system for controlling the supply of fluid to the cylinder to force the probe to move the test piece along the flow path.

3. A system according to claim 1, wherein the metal detector test system comprises a linkage assembly comprising a number of links, pivoted together in a concertina arrangement, the test piece being fixed on one of the links constituting said guide member; and a control system for extending the linkage assembly so as to move the test piece along the flow path.

4. A system according to any of the preceding claims, wherein the flow path extends in a substantially vertical direction.

5. A system according to claim 4, when dependent on claim 1, wherein the metal detector test system comprises an elongate flexible line constituting said guide member to which the test piece is fixed and which can be lowered along the flow path; and a control system for controlling the payout of the line.

6. A system according to any of the preceding claims, wherein the metal detector test system is operable to move the test piece to a retracted position where it does not interfere with articles flowing along the flow path.

7. A system according to claim 6, wherein the retracted position is located upstream of a point of entry of articles into the flow path.

8. A system according to any of the preceding claims, wherein the parts of the metal detector test system which can be brought into the vicinity of the metal detection system are non-magnetic.

9. A system according to any of the preceding claims, wherein the metal detection system comprises a metal detector in the form of a coil surrounding the flow path.

10. A system according to any of the preceding claims, further comprising a processing system for monitoring the result of moving the test piece past the metal detector and for adjusting the sensitivity of the metal detection system, if necessary.

11. A system according to any of the preceding claims, wherein the system comprise a combinational weighing apparatus including a number of article weighers, and a controller for causing articles in a selected combination of the weighers to be passed to the flow path, when the combination satisfies a predetermined condition.

12. An article packaging apparatus comprising an article handling system according to any of the preceding claims; and a packaging machine to which articles are fed from the flow path.

13. A method of monitoring the performance of a metal detection system for detecting the passage of metal items along a flow path of an article handling system according to any of the preceding claims, the method comprising controllably moving the guide member so as to move the metal test piece along the flow path; and determining whether or not the metal detection system detects the metal test piece.

14. A method according to claim 13, further comprising stopping the article handling system if the detection system does detect the test piece.

15. A method according to claim 13 or claim 14, further comprising stopping the article handling system if the detection system does detect the test piece.

16. A method according to any of claims 13 to 15, wherein the metal test piece is moved along the flow path during normal operation of the article handling system.

17. A method according to any of claims 13 to 16, when dependent on claim 12, further comprising creating a non-standard bag if the metal detection system detects a metal item.

18. A method according to claim 17, further comprising stopping the packaging machine with a bag suspected of containing a metal item located within the packaging machine.

## Patentansprüche

1. Handhabungssystem für Gegenstände mit
einer Strömungsbahn, entlang der Gegenstände bei Anwendung laufen;
einem Metallerfassungssystem mit einer Metallerfassungseinrichtung für ein Erfassen des Vorbeitretens von Metallstücken entlang der Strömungsbahn; und
einem Metallerfassungseinrichtungstestsystem,
**dadurch gekennzeichnet, dass**
das Metallerfassungseinrichtungstestsystem ein Führungselement hat, an dem ein Metallteststück befestigt ist,
wobei das Führungselement relativ zu der Strömungsbahn angeordnet ist und so betreibbar ist, dass das Teststück entlang der Strömungsbahn bis hinter die Metallerfassungseinrichtung bewegt wird, um die Empfindlichkeit der Erfassungseinrichtung zu erfassen.

2. System gemäß Anspruch 1, wobei das Metallerfassungseinrichtungstestsystem folgendes aufweist:
einen per Fluid betätigten Zylinder, der mit einer Probe gekoppelt ist, die das Führungselement bildet, an dem das Teststück befestigt ist; und
ein Steuersystem für ein Steuern der Lieferung an Fluid zu dem Zylinder, um die Probe dazu zu drängen, dass sie das Teststück entlang der Strömungsbahn bewegt.

3. System gemäß Anspruch 1, wobei das Metallerfassungseinrichtungstestsystem folgendes aufweist:
eine Gelenkbaugruppe mit einer Anzahl an Verbindungen, die miteinander bei einer Faltanordnung gedreht werden, wobei das Teststück an einer der Verbindungen befestigt ist, die das Führungselement bildet; und
ein Steuersystem zum Ausfahren der Gelenkbaugruppe in einer derartigen Weise, dass das Teststück entlang der Strömungsbahn bewegt wird.

4. System gemäß einem der vorherigen Ansprüche, wobei
die Strömungsbahn sich in einer im Wesentlichen vertikalen Richtung erstreckt.

5. System gemäß Anspruch 4, bei Abhängigkeit von Anspruch 1, wobei das Metallerfassungseinrichtungstestsystem folgendes aufweist:
eine längliche flexible Leine, die das Führungselement bildet, an dem das Teststück befestigt ist, und die entlang der Strömungsbahn abgesenkt werden kann; und
ein Steuersystem für ein Steuern der Abgabe der Leine.

6. System gemäß einem der vorherigen Ansprüche, wobei
das Metallerfassungseinrichtungstestsystem so betreibbar ist, dass das Teststück zu einer eingefahren Position bewegt wird, bei der es nicht die entlang der Strömungsbahn strömenden Gegenstände beeinträchtigt.

7. System gemäß Anspruch 6, wobei
die eingefahrene Position stromaufwärtig von einem Eingangspunkt der Gegenstände in die Strömungsbahn angeordnet ist.

8. System einem gemäß der vorherigen Ansprüche, wobei
die Teile des Metallerfassungseinrichtungstestsystems, die in die Nähe des Metallerfassungssystems gebracht werden können, nicht magnetisch sind.

9. System gemäß einem der vorherigen Ansprüche, wobei
das Metallerfassungssystem eine Metallerfassungseinrichtung in der Form einer die Strömungsbahn umgebenden Spule aufweist.

10. System gemäß einem der vorherigen Ansprüche, dass des weiteren ein Prozesssystem aufweist, um das Ergebnis des Bewegens des Teststückes bis hinter die Metallerfassungseinrichtung zu überwachen und um die Empfindlichkeit des Metallerfassungssystems bei Bedarf einzustellen.

11. System gemäß einem der vorherigen Ansprüche, wobei
das System ein Kombinationswägegerät aufweist, das eine Anzahl an Gegenstandswägeeinrichtungen und eine Steuereinrichtung hat, die bewirkt, dass Gegenstände bei einer gewählten Kombination der Wägeeinrichtungen zu der Strömungsbahn treten, wenn die Kombination eine vorbestimmte Bedingung erfüllt.

12. Verpackungsgerät für Gegenstände mit
einem Handhabungssystem für Gegenstände gemäß einem der vorherigen Ansprüche und
einer Verpackungsmaschine, zu der Gegenstände von der Strömungsbahn zugeführt werden.

13. Verfahren zum Überwachen der Leistung eines Metallerfassungssystems für ein Erfassen des Vorbeitretens von Metallstücken entlang einer Strömungsbahn eines Handhabungssystems für Gegenstände gemäß einem der vorherigen Ansprüche, wobei das Verfahren die folgenden Schritte aufweist:
Steuerbares Bewegen des Führungselementes in derartiger Weise, dass das Metallteststück entlang der Strömungsbahn bewegt wird; und
Bestimmen, ob das Metallerfassungssystem das Metallteststück erfasst oder nicht.

14. Verfahren gemäß Anspruch 13, das des weiteren den folgenden Schritt aufweist:
Anhalten des Handhabungssystems für Gegenstände, wenn das Erfassungssystem das Teststück erfasst.

15. Verfahren gemäß Anspruch 13 oder 14, das des weiteren den folgenden Schritt aufweist:
Anhalten des Handhabungssystems für Gegenstände, wenn das Erfassungssystem das Teststück erfasst.

16. Verfahren gemäß Anspruch einem der Ansprüche 13 bis 15, wobei
das Metallteststück entlang der Strömungsbahn während des normalen Betriebs des Handhabungssystems für Gegenstände bewegt wird.

17. Verfahren gemäß einem der Ansprüche 13 bis 16 in der Abhängigkeit von Anspruch 12, das des weiteren den folgenden Schritt aufweist:
Erzeugen eines nicht genormten Beutels, wenn das Metallerfassungssystem ein Metallstück erfasst.

18. Verfahren gemäß Anspruch 17, das des weiteren den folgenden Schritt aufweist:
Anhalten der Verpackungsmaschine bei einem Beutel, der unter dem Verdacht steht, dass er ein Metallstück enthält, das sich innerhalb der Verpackungsmaschine befindet.

## Revendications

1. Système de manipulation d'articles comprenant un chemin de flux le long duquel des articles se déplacent en utilisation, un système de détection de métaux comportant un détecteur de métaux pour détecter le passage d'objets métalliques le long du chemin de flux, et un système de test de détecteur de métaux, **caractérisé en ce que** le système de test de détecteur de métaux comprend un élément de guidage auquel est fixée une pièce de test en métal, l'élément de guidage étant positionné par rapport au chemin de flux et actionnable pour déplacer la pièce de test le long du chemin de flux devant le détecteur de métaux afin de détecter la sensibilité du détecteur.

2. Système selon la revendication 1, dans lequel le système de test de détecteur de métaux comprend un vérin actionné par fluide couplé à une sonde constituant ledit élément de guidage auquel est fixée la pièce de test, et un système de commande pour commander l'alimentation en fluide du vérin afin de faire déplacer la pièce de test le long du chemin de flux.

3. Système selon la revendication 1, dans lequel le système de test de détecteur de métaux comprend une tringlerie comprenant un certain nombre de liaisons, montées à pivotement ensemble en accordéon, la pièce de test étant fixée sur l'une des liaisons constituant ledit élément de guidage, et un système de commande pour étendre la tringlerie afin de déplacer la pièce de test le long du chemin de flux.

4. Système selon l'une quelconque des revendications précédentes, dans lequel le chemin de flux s'étend dans une direction sensiblement verticale.

5. Système selon la revendication 4, lorsqu'elle dépend de la revendication 1, dans lequel le système de test de détecteur de métaux comprend une ligne flexible allongée constituant ledit élément de guidage auquel la pièce de test est fixée et qui peut être abaissée le long du chemin de flux, et un système de commande pour commander le déroulement de la ligne.

6. Système selon l'une quelconque des revendications précédentes, dans lequel le système de test de détecteur de métaux peut être actionné pour mettre la pièce de test dans une position rétractée où elle n'entre pas en interaction avec les articles circulant le long du chemin de flux.

7. Système selon la revendication 6, dans lequel la position rétractée est située en amont d'un point d'entrée des articles dans le chemin de flux.

8. Système selon l'une quelconque des revendications précédentes, dans lequel les parties du système de test de détecteur de métaux qui peuvent être amenées au voisinage du système de détection de métaux sont non magnétiques.

9. Système selon l'une quelconque des revendications précédentes, dans lequel le système de détection de métaux comprend un détecteur de métaux sous la forme d'une bobine entourant le chemin de flux.

10. Système selon l'une quelconque des revendications précédentes, comprenant en outre un système de traitement pour surveiller le résultat du déplacement de la pièce de test devant le détecteur de métaux et pour régler la sensibilité du système de détection de métaux, si nécessaire.

11. Système selon l'une quelconque des revendications précédentes, dans lequel le système comprend un appareil de pesée combinatoire comportant un certain nombre de bascules pour articles, et un dispositif de commande pour faire passer des articles, dans une combinaison de bascules choisie, dans le chemin de flux, lorsque la combinaison satisfait une condition prédéterminée.

12. Appareil d'emballage d'articles comprenant un système de manipulation d'articles conforme à l'une quelconque des revendications précédentes, et une machine d'emballage qui reçoit les articles provenant du chemin de flux.

13. Procédé de surveillance des performances d'un système de détection de métaux pour détecter le passage d'objets métalliques le long d'un chemin de flux selon l'une quelconque des revendications précédentes, le procédé comprenant le fait de déplacer de manière contrôlée l'élément de guidage afin de déplacer la pièce de test en métal le long du chemin de flux, et de déterminer si le système de détection de métaux détecte la pièce de test en métal.

14. Procédé selon la revendication 13, comprenant en outre le fait d'arrêter le système de manipulation d'articles si le système de détection détecte bien la pièce de test.

15. Procédé selon la revendication 13 ou 14, comprenant en outre le fait d'arrêter le système de manipulation d'articles si le système de détection détecte bien la pièce de test.

16. Procédé selon l'une quelconque des revendications 13 à 15, dans lequel la pièce de test en métal est déplacée le long du chemin de flux au cours du fonctionnement normal du système de manipulation d'articles.

17. Procédé selon l'une quelconque des revendications 13 à 16, lorsqu'elle dépend de la revendication 12, comprend en outre le fait de créer un sachet non standard si le système de détection de métaux détecte un objet métallique.

18. Procédé selon la revendication 17, comprenant en outre le fait d'arrêter la machine d'emballage lorsqu'un sachet soupçonné de contenir un objet métallique se trouve à l'intérieur de la machine d'emballage.
